# EUROPEAN PATENT SPECIFICATION

(11) **EP 4 311 954 B1**
(45) Date of publication and mention of the grant of the patent: **26.11.2025**
(21) Application number: 22186723.7
(22) Date of filing: 25.07.2022
(51) Int. Cl.: F16D 55/00, F16D 55/226, F16D 63/00, F16D 65/097

(54) **BRAKE ASSEMBLY FOR A VEHICLE AND METHOD FOR APPLYING A PARK BRAKE FORCE**
BREMSANLAGE FÜR EIN FAHRZEUG UND VERFAHREN ZUM ANLEGEN EINER FESTSTELLBREMSKRAFT
ENSEMBLE FREIN POUR VÉHICULE ET PROCÉDÉ D'APPLICATION D'UNE FORCE DE FREIN DE STATIONNEMENT

(43) Date of publication of application: 31.01.2024
(73) Proprietor: KNORR-BREMSE Systeme für Nutzfahrzeuge GmbH, 80809 München (DE)
(72) Inventor: ADAMCZYK, Philipp, 82347 Bernried (DE); BLESSING, Michael, 80687 München (DE); GYÖRKE, Zsombor, 8360 Keszthely (HU); HEIGL, Korbinian, 80939 München (DE); HOLLOSI, Mate, 1097 Budapest (HU); KLINGNER, Matthias, 82276 Adelshofen (DE); KOKREHEL, Csaba, 1119 Budapest (HU); KRÜGER, Sven Philip, 81476 München (DE); MONORI, Gyula, 6065 Lakitelek (HU); NAKAMURA, Tatsuro, 1027 Budapest (HU); PESCHEL, Michael, 82296 Schöngeising (DE); TOTH, Janos, 6000 Kecskemét (HU); HÖS, Levente, 1047 Budapest (HU); TOTH-KATONA, Tamas, 1039 Budapest (HU); SCHÖFBERGER, Tobias, 84048 Mainburg (DE); SZABO, Janos, 1101 Budapest (HU)

(56) References cited:
- DE-A1- 102004 002 760
- DE-A1- 102019 109 465
- DE-A1- 19 800 643
- DE-B4- 102015 200 737
- KR-A- 20090 102 898
- US-A- 3 003 587
- US-A1- 2019 056 005

## Description

The present invention relates to a brake assembly for a vehicle, a method for applying a park brake force to a brake disc of such brake assembly, and a vehicle comprising such brake assembly.

In today's commercial vehicles usually the parking brake is integrated in the service brake. From a cost point of view the integrated brake version is highly attractive. However, to fulfill the parking brake function, a separate parking brake actuator, e.g. a spring element, for pre-stressing an auxiliary piston, is needed. This portion of the park brake arrangement is quite space consuming, since it has to be assured that the force of the spring is sufficient enough over the whole stroke.

DE 10 2015 200737 B4 relates to a disc brake, comprising a brake disc, a brake carrier spanning the brake disc, a clamping device with a brake caliper and an application cylinder for applying at least one brake pad in the direction of the brake disc, a parking brake device fixed to or integrated into a brake carrier. The parking brake device has a locking device with at least one intermediate a release position and a functional position adjustable locking element and a release device. The locking element in the functional position in a counter contour engages on the brake disc. In the release position the locking element and the counter contour are disengaged. The counter contour is designed as a toothing extending radially to the axis of rotation of the brake disc from an inner edge of the brake disc.

DE 10 2004 002760 A1 relates to a braking device for a motor vehicle with a service brake unit, comprising brake pads that can be pressed onto a brake disc, and a parking brake unit, comprising also has brake pads that can be pressed onto the brake disc. The brake disc has a friction ring surface for the brake pads of the service brake unit and a friction ring surface for the brake pads of the parking brake unit.

KR 2009 0102898 A relates to a parking brake apparatus for a vehicle including a brake disk, a fork plate, and a piston. The brake disk is fitted with a saw-toothed wheel in the circumference direction. The fork plate is engaged with the saw-toothed wheel of the brake disk and has an angular motion around a connection pin. The piston is reciprocated within a stationary cylinder by hydraulic pressure to operate the plate fork in the vertical direction.

DE 198 00 643 A1 relates to a parking brake with at least one first part connected to a wheel and a second part fixed to the vehicle chassis and which is brought into engagement with the first part in order to hold the vehicle stationary. The first part has at least one opening and the second part has a protrusion which is fed into the opening when the parking brake is actuated, thereby providing a shape-locking connection between the wheel and the vehicle chassis.

DE 10 2019 109465 A1 relates to a braking system for a braking system for a vehicle with at least one vehicle wheel, comprising at least one friction brake assigned to the vehicle wheel, which acts during operation and / or in the parked state of the vehicle, the braking system comprising an additional mechanical locking device of the vehicle wheel, which locks the vehicle wheel in the parked state.

US 3 003 587 A relates to a hydraulic brake comprising a single rotatable brake disc secured to a rotatable spindle to be braked and a nonrotatable brake member slidably mounted for floating movement axial of said disc but restrained against rotation with said disc. The non-rotatable member comprising a member C-shaped in cross section having limbs flanking opposite sides of the disc, one of said limbs having cylinder means formed therein and extending therethrough in a direction axial of the disc, a piston removably mounted for axial sliding movement in said cylinder means. Friction pads are opposed to the disc, one of said pads being mounted on a limb of said C-shaped member and the other being mounted opposite thereto on said piston. Fluid pressure means for advancing said piston frictionally engage the friction pads with the disc. A locking mechanism is provided for positively locking the same disc against rotation, said locking mechanism including a number of widely spaced V-shaped notches in the outer periphery of the disc. Bolt means having a wedge-shaped end with a pair of flat converging sides complementary in shape to said notches radially engage in said notches and locking the disc and the nonrotatable member against relative rotation at any floating position of said member.

US 2019/056005 A1 relates to a parking brake and anti-theft apparatus for a vented disc brake, including a brake assembly, an actuator and a rocker or a locking arm. The brake assembly includes a first and second rotor plates separated by spacers and slots. The rocker and locking arm includes pawls extending from an edge, and are positioned adjacent to a circumference of the rotor plates, aligned between the rotor plates. The actuator moves the rocker and/or locking arm between locked and unlocked positions such that, in the locked configuration, the pawls are inserted into the slots, and in the unlocked configuration, the pawls are disposed outside the slots.

Therefore, it is an object of the present invention to provide a brake assembly for a vehicle capable of providing a compact and/or flexible design.

The object is solved by the subject-matter of the independent claims. Further aspects of the present invention are subject to the dependent claims.

According to the present invention, a brake assembly for a vehicle comprises a brake disc rotatable about a rotational axis, and at least one service brake assembly comprising at least one service brake pad and configured to apply a service brake force on a radial surface side of the brake disc, wherein the at least one service brake pad is axially moveable with respect to the rotational axis and comprises a service brake braking surface facing the radial surface side of the brake disc to apply the service brake force. The brake assembly further comprises at least one park brake assembly comprising at least one park brake pad and configured to apply a park brake force on the or another radial surface side of the brake disc, wherein the at least one park brake pad is axially moveable with respect to the rotational axis and comprises a park brake braking surface facing the or the other radial surface side of the brake disc to apply the park brake force. The park brake braking surface of the at least one park brake pad is arranged at a radial park brake pad distance with respect to the rotational axis different from a radial service brake pad distance of a service brake braking surface of the at least one service brake pad.

Consequently, the brake assembly comprises a park brake assembly separated from the service brake assembly in terms of providing separate park brake and service brake pads with respective distinct braking surfaces to be separately moveable in the axial direction with respect to the rotational axis of the brake disc to apply a braking force. The park brake assembly may thereby be spatially separated from the service brake assembly or may be integrated in the service brake assembly but with the at least one park brake pad separated from the at least one service brake pad for a respective independent movement. With respect to design flexibility, it may be advantageous to provide the park brake assembly spatially separated from the service brake assembly for an independent positioning or the like. Further, separating the park brake assembly from the service brake assembly, e.g. by a separate caliper, allows to provide a braking assembly having a reduced overall axial length while still delivering a sufficient braking force or clamping force, respectively. Thus, it is also possible to mount the parking brake assembly at the front axle of a vehicle. In turn, the integration of the park brake assembly in the service brake assembly, for example, within a common caliper may allow a more compact design.

As a further basic principle, the different radial distances of the park brake braking surface and the service brake braking surface with respect to the rotational axis of the brake disc result in different levers with respect to an achievable braking torque acting on the brake disc. Due to the different radial distances and therefore different levers, the park brake braking surface and the service brake braking surface may be subject to different braking torques when applying the same clamping force. In turn, different clamping forces may be required for the same braking torque. The respective radial distance with respect to rotational axis refers to the radial distance from the rotational axis to a mid-height of the respective braking surface in the radial direction with respect to the rotational axis. In concrete, the radial park brake pad distance is the radial distance from the rotational axis to a side of the park brake pad facing the rotational axis in the radial direction plus half of the radial distance between the side of the park brake facing the rotational axis in the radial direction and an opposed side of the park brake pad facing away from the rotational axis in the radial direction. Accordingly, the radial service brake pad distance is the radial distance from the rotational axis to a side of the service brake pad facing the rotational axis in the radial direction plus half of the radial distance between the side of the service brake facing the rotational axis in the radial direction and an opposed side of the service brake pad facing away from the rotational axis in the radial direction.

Further, the at least one park brake pad is arranged to extend in a cooling channel of the brake disc formed between two outer radial surface sides of the brake disc from an outer circumference or an inner circumference of the brake disc.

Such cooling channel may be provided as at least a groove extending circumferentially between the two radial surface sides of the brake disc facing away from each other. As an example, at least one outer cooling channel portion having an opening in the radial direction facing away from rotational axis and/or at least one inner cooling channel portion having an opening in the radial direction facing toward the rotational axis may be formed in the brake disc. The at least one park brake pad provides a park brake braking surface at least partially extending the cooling channel, for example, the inner cooling channel portion to be moved toward a surface of the inner cooling channel extending radially with respect to the rotational axis upon an axial movement of the at least one park brake pad. In principle, the term "park brake pad" may not be limited to a flat body but may comprise any type of configuration to provide a respective park brake braking surface for a frictional pairing with the brake disc to apply a braking force. The axial movement of the park brake braking surface at least partially extending in the cooling channel may be actuated by a ball-ramp mechanism. Such ball-ramp mechanism may be configured to move one park brake braking surface toward an opposed radial surface side of the cooling channel. In a variant, the park brake assembly may comprise a brake pad with two opposed park brake braking surfaces, each of which being moved toward respectively opposed radial surfaces sides of the cooling channel. In other words, the opposed park brake braking surfaces are going to be spread apart from each other to simultaneous apply a braking force on the opposed radial surface sides of the cooling channel. In a further variant, the park brake assembly may provide two separate park brake pads, wherein the respective park brake braking surfaces are facing away from each other in the axial direction with respect to the rotational axis of the brake disc. The ball-ramp mechanism may be configured to spread the opposed park brake pads apart comparably to the configuration with two park brake braking surfaces on one park brake pad. The described actuation of the at least one park brake pad or park brake braking surface(s) is not limited to the actuation by a ball-ramp mechanism but may be also actuated by another electric, hydraulic or pneumatic mechanism, which may comprise any other actuators such as levers, control slides, pistons or the like.

Since the frictional pairing of the park brake braking surface and the brake disc is provided within the cooling channel of the brake disc, a so-called cold after hot effect is avoided or at least reduced. Furthermore, the use of a park brake braking surface with a comparably higher friction coefficient, in particular with respect to the park brake braking surface acting on an inner cooling channel portion, for example, to compensate for the comparably small radial park brake pad distance, may not have any impact on the controllability of the service brake assembly.

In some embodiments, the park brake pad and the service brake pad are configured and arranged in a respective radial distance such that the park brake pad and the service brake pad do not act on the same circumferential portions of the brake disc. In other words, the park brake pad and the service brake pad are configured and arranged in a respective radial distance that a radial distance of the side of the park brake pad or the service brake pad facing the rotational axis in the radial direction is more than a radial distance of the other brake pad, i.e. the service brake pad or the park brake pad, facing away from the rotational axis in the radial direction. Accordingly, in such configuration, the park brake assembly uses a different ring portion of the brake disc for force transfer as the service brake assembly.

In view of the above, besides the advantages of a more compact design and/or increased design flexibility, the brake assembly may provide less heat input into the parking brake assembly from the brake disc, since the park brake braking surface of the park brake pad is not part of the service brake braking surface due to the respective separation. Further, the park brake pad may be subject to less wear, which may allow to omit a respective wear adjuster mechanism, and to achieve a less complex active caliper release, which may also provide a comparably strong active caliper release spring contributing to efficiency in view of the omitted wear adjuster.

In some embodiments, the radial park brake pad distance is more than the radial service brake pad distance relative to the rotational axis.

For example, an outer ring portion of the brake disc extending circumferentially around the rotational axis as park brake brake disc portion may be assigned to the park brake braking surface, whereas an inner, preferably adjacent, ring portion of the brake disc extending circumferentially around the rotational axis as service brake brake disc portion may be assigned to the service brake braking surface. Due to the increased friction radius of the park brake pad corresponding to the radial park brake pad distance, the required clamping force for a park brake function may be decreased to achieve the same brake torque in comparison to a smaller friction radius. This may allow the use of a stiffer caliper for the park brake assembly. In turn, the service brake assembly with the smaller friction radius of the service brake pad corresponding to the radial service brake pad distance may require an increased clamping force to achieve the same braking torque. However, this requirement may be easily accomplished by an appropriate service brake assembly design.

In some embodiments, the radial park brake pad distance is less than the radial service brake pad distance relative to the rotational axis.

Here, the reverse principle of the above is applicable. Specifically, the inner ring portion of the brake disc extending circumferentially around the rotational axis as park brake brake disc portion may be assigned to the park brake braking surface, whereas the outer, preferably adjacent, ring portion of the brake disc extending circumferentially around the rotational axis as service brake brake disc portion may be assigned to the service brake braking surface. Consequently, the requirement of a comparably higher clamping force may apply for the park brake assembly due to the smaller friction radius. However, this potential requirement may be, at least to some extent, compensated by providing a frictional pairing with respect to the park brake brake disc portion and the park brake braking surface, as described below. In turn, this configuration allows the service brake assembly to be operated with a clamping force comparably lower for the same braking torque.

In some embodiments, the brake disc comprises a park brake brake disc portion facing the park brake braking surface of the at least one park brake pad in at least one rotational position of the brake disc, and a service brake brake disc portion facing the service brake braking surface of the at least one service brake pad in the at least one or in at least one other rotational position of the brake disc, and wherein a frictional pairing of the park brake brake disc portion and the park brake braking surface of the at least one park brake pad is configured to provide a friction coefficient different from the friction coefficient of a frictional pairing of the service brake brake disc portion and the service brake braking surface of the at least one service brake pad.

The different frictional pairings or friction coefficients, respectively, may be provided by different materials or respective coatings of the park brake brake disc portion and the service brake brake portion of the brake disc. For example, the park brake brake disc portion may be provided by the brake disc main body made from a single cast brake disc, e.g. a cast iron disc, whereas the service brake brake disc portion is provided by separate service brake brake portion of a different material mounted on the brake disc main body or by a coating or the like. Alternative or in addition, the park brake braking surface may be made of or may comprise a material different from the material of the service brake braking surface. In principle, the park brake brake disc portion and/or the service brake brake disc portion may be mounted on the brake disc main body as friction ring portions, which may, alternative or in addition to the provision of different frictional pairings, provide form-fit portions as described later. The park brake brake disc portion and/or the service brake brake disc portion as separate members to be mounted on the brake disc body may be made of stainless steel to reduce corrosion effects, while reducing costs by not providing the whole brake disc out of stainless steel. The park brake brake disc portion and/or the service brake brake disc portion may also be annular segments coaxially arranged to form the brake disc. The brake disc may provide park brake brake disc portion and/or the service brake brake disc portion on each outer radial surface side in parallel to one another and/or concentrically with respect to the rotational axis.

Besides the use of different materials for the park brake brake disc portion, the service brake brake disc portion, the park brake braking surface and/or the service brake braking surface, the respective portions or surfaces may, alternatively or in addition, provide different surface properties to provide the respective different frictional pairings.

Accordingly, in a configuration with the radial park brake pad distance being less than the radial service brake pad distance as per the above, the frictional pairing of the park brake braking surface and the park brake brake disc portion may be configured to provide a higher friction coefficient than the frictional pairing of the service brake braking surface and the service brake brake disc portion, or at least a friction coefficient higher than 0.3, preferably 0.45. Accordingly, the required clamping force, respectively, of the park brake assembly may be decreased. Further, besides the at least partial compensation of comparably higher clamping forces required in the configuration of the radial park brake pad distance being less than the radial service brake pad distance, the possible reduction of the clamping force with respect to the park brake assembly takes also effect on the configuration with the radial park brake pad distance being more than the radial service brake pad distance. In such configuration the required clamping force for the same braking torque may be further reduced to, for example, allow a more compact design.

In some embodiments, the friction coefficient of the frictional pairing of the park brake braking surface of the at least one park brake pad and the brake disc is at least 0.55.

For example, rubber materials may be used for the park brake pad to achieve the friction coefficient of more than 0.55, preferably more than 0.6. As already indicated before, the friction coefficient may, in principle, be affected by coatings, machining, and/or connection of respective material and/or machined parts.

In some embodiments, the brake assembly comprises the park brake assembly comprising the at least one park brake pad arranged to extend in a cooling channel of the brake disc and another park brake assembly.

The other park brake assembly may be a conventional park brake assembly integrated into the service brake assembly as known in the art. Alternatively, the other park brake assembly may be a park brake assembly as described according to the present invention.

Preferably, the park brake assembly arranged to extend in a cooling channel of the brake disc may thereby form an auxiliary park brake assembly to support the other park brake assembly or to be only activated under certain circumstances or in predetermined operating modes. For example, the park brake assembly arranged to extend in a cooling channel of the brake disc may be only activated in a standstill state of a vehicle comprising the respective brake assembly. By limiting such activation to a standstill state of the vehicle, wear of the respective at least one park brake pad may be avoided. Further, no dynamic torque effects may have to be considered.

In some embodiments, the park brake braking surface of the at least one park brake pad comprises a park brake pad form-fit portion, and the brake disc comprises a corresponding brake disc form-fit portion at the radial park brake pad distance.

Accordingly, the provision of a clamping force due to the frictional pairing of the park brake braking surface and the brake disc may be further supported by a form-fit engagement. The park brake braking surface may be therefore configured to provide a positive contour as park brake pad form-fit portion to engage with a corresponding negative contour as brake disc form-fit portion. Such contours may be formed as serrations with an equivalent spacing of teeth. For example, the serrations have a certain defined contact angle.

Consequently, the force transfer from the park brake pad on the brake disc is a combination of the frictional pairing under further consideration of the contact angle provided by the serrations and form-fit. In other words, frictional forces act on the contact surfaces of the engaged park brake pad form-fit portion and brake disc form-fit portion, which also transfer forces by the form-fit connection.

The brake disc form-fit portion may be integrally formed by the park brake brake disc portion or as a part thereof. Alternatively or in addition, the brake disc form-fit portion may be provided by a separate brake disc form-fit portion mounted to the park brake brake disc portion, e.g. as additional ring member. This may enhance the flexibility in the selection of materials and/or shapes, and may reduce costs by limiting the use of expensive and/or wear-sensitive materials to respective portions.

With respect to a combination of the friction-based and form-fit based configuration of the pairing of the park brake braking surface and the park brake brake disc portion, the required clamping forces to be provided by the park brake assembly may be significantly reduced. Accordingly, the respective actuator mechanism for the park brake pad and the respective clamping unit, such as a caliper, may provide a more compact design. This is particularly advantageous for commercial vehicles such as trucks, in particular electric trucks with electric axles and batteries, which generally suffer from installation space constraints. The less complex clamping units may also provide a reduction in costs and weight as well as an increased functional safety with respect to the reduced number of parts which may fail. Further, a simple manufacturing and development of park brake pads may be accomplished.

In some embodiments, the park brake assembly comprises a park brake pad carrier assembly carrying the at least one park brake pad and configured to move the at least one park brake pad toward the brake disc in the axial direction or to allow a respective movement of the at least one park brake pad, and wherein the park brake assembly comprises at least one local displacement member arranged between the at least one park brake pad and the park brake pad carrier assembly configured to allow a relative displacement of the at least one park brake pad with respect to the park brake pad carrier assembly in a direction within the braking surface plane.

Since the park brake pad form-fit portion may not be ideally positioned opposed to the corresponding brake disc form-fit portion for a direct form-fit match, the at least one local displacement member allows the park brake pad to be moved by the brake disc upon contact to some extent in a direction within the park brake braking surface plane. Preferably, the at least one local displacement member is configured to allow the park brake pad to move at least in a direction of the projection of the rotational direction substantially perpendicular to the rotational axis and perpendicular to the radial direction.

The park brake pad carrier assembly may comprise an actuator mechanism to move the at least one park brake pad toward the brake disc in an axial direction substantially perpendicular to the braking surface of the at least one park brake pad. Alternatively, the actuator mechanism may be separate from the park brake pad carrier assembly, wherein the park brake pad carrier assembly allows a respective movement of the at least one park brake pad by carrying the at least one park brake pad and providing an interface for the actuator mechanism to actuate the at least one park brake pad.

In some embodiments, the at least one local displacement member is a bearing member arranged on a surface side of the at least one park brake pad opposed to the braking surface of the at least one park brake pad.

Accordingly, the park brake pad may be supported with at least one degree of freedom in the park brake braking surface plane, preferably in the direction of the projection of the rotational direction substantially perpendicular to the rotational axis and perpendicular to the radial direction, by the bearing with a park brake carrier. The bearing member may be provided by at least one roller.

In some embodiments, the at least one local displacement member is a spring member arranged on a lateral surface side of the at least one park brake pad substantially in parallel to the axial direction and perpendicular to a projection of the rotational movement of the brake disc in parallel to the at least one park brake pad with a respective spring force acting in the direction of the projection of the rotational movement of the brake disc in parallel to the at least one park brake pad.

Preferably, the park brake assembly comprises at least two spring members, each of which being arranged on opposed lateral surface sides of the at least one park brake pad. For example, the first spring member as a compression spring member is arranged on the upstream lateral surface side with respect to the rotational direction and the second spring member as another compression spring member is arranged on the downstream lateral surface side. If the respective park brake pad is moved by the brake disc in the rotational direction upon contact before the brake disc is stopped, the first spring is elongated and the second spring is compressed. Upon release of the park brake pad from the brake disc, the park brake pad is re-centered by the spring members. Preferably, the first spring member and the second spring member are precompressed spring members, wherein one of the first or the second spring member is compressed even more while the other one relaxes a bit upon a respective movement of the brake disc in engagement with the park brake pad.

In some embodiments, the park brake assembly comprises an overload clutch arranged on the surface side of the at least one park brake pad opposed to the braking surface of the at least one park brake pad.

The overload clutch may allow the park brake pad to retract from the brake disc when the braking torque gets too high, e.g. when one wheel of one axle gets a lot earlier in force transfer contact with the park brake assembly than the other park brake assemblies. In such event, the overload clutch allows the park brake pad form-fit portion to jump into the next section of the brake disc form-fit portion when the braking torque gets too high. By such jumping into the next section, a more even share of the overall braking torque between all the parking brake assemblies of a vehicle may be achieved. Otherwise, the park brake assembly which receives a form-fit force transfer first from the park brake pad to the park brake carrier would have to carry the brake force of the whole vehicle. This may overload the bearings and may destroy or at least damage the park brake. Preferably, the overload clutch could be positioned on the surface side of the park brake pad opposed to the park brake braking surface. e.g. within an actuator mechanism to actuate the park brake pad such as a piston or plunger. However, the overload clutch maybe also positioned somewhere else and may not have to be directly arranged on the surface side of the at least one park brake pad opposed to the braking surface of the at least one park brake pad. For example, the overload clutch may be directly or indirectly positioned between the park brake pad and a lever of lever mechanics as addressed in the following.

In a variant, the overload clutch function may be achieved by common lever mechanics of the actuator mechanism or the axial spring member as described below spring. For example, the overload clutch function may be achieved by simply pushing back an actuating piston of the actuator mechanism over the lever mechanism against a spring of the actuator mechanism.

In an exemplary embodiment the park brake pad form-fit portion and the brake disc portion are formed as serrations with respective teeth having a certain defined contact angle. On the one hand, the contact angle prevents a self-locking because of friction so that the overload function is possible. On the other hand, the contact angle is big enough to reduce the required clamping force as much as possible. Accordingly, the force transfer with such geometry is a combination of the frictional pairing and form-fit.

In some embodiments, the park brake assembly comprises an axial spring member arranged on the surface side of the at least one park brake pad opposed to the braking surface of the at least one park brake pad with a predetermined axial spring force acting in the axial direction.

With respect to the axial spring member providing an overload clutch functionality the axial spring member may be compressed to provide a reverse clamping stroke, when the parking braking torque gets too high. The park brake pad gets pushed back in accordance with the form-fit contour, e.g. by the angle of the serrations.

Alternatively or in addition, the axial spring member may provide a preloaded clamping mechanism by the spring force of the axial spring member without the alignment of the previously described spring members. For example, the axial spring member may be directly connected to the actuator mechanism such as a piston or plunger but may also be positioned, for example between the park brake pad and a lever mechansim or within an axial spring member chamber to act on the surface side of the park brake pad opposed to the park brake braking surface. When the park brake pad form-fit portion does not align precisely to the brake disc form-fit portion at the time of actuation to apply a braking force, the brake disc is configured to slide relative to the park brake pad to the next section of the park brake pad form-fit portion, e.g. the next serration section, and the park brake pad form-fit portion may snap into the brake disc form-fit portion, accordingly, to transfer the clamping force.

In another aspect, the present invention relates to a method for applying a park brake force on a radial surface side of a brake disc of a brake assembly as previously described, wherein the at least one park brake pad of the brake assembly extending in the cooling channel as previously described is only activated to apply the park brake force in a standstill state of a vehicle.

As previously described with respect to the brake assembly with the park brake pad extending at least partially within the cooling channel of the brake disc, the park brake assembly provides a frictional paring in the area of the cooling channel of the brake disc for a parking brake function. For example, a small additional friction ring area as park brake brake disc portion is located on the inner radial surface wall of the cooling channel, which will be used for the parking brake. Specifically, with such parking brake assembly configured to act on the cooling channel as additional or auxiliary park brake assembly as previously addressed, the respective park brake design may be kept compact. In particular, with this park brake assembly being only activated in a standstill state of a respective vehicle or at least the respective wheel thereof, the park brake assembly may only be configured to apply a clamping force for holding the vehicle in the standstill state instead of braking the vehicle in terms of a deceleration procedure.

In principle, any feature disclosed with respect to the brake assembly or the park brake assembly, respectively, is also applicable to the method and vice versa.

In another aspect, the present invention relates to a vehicle comprising a brake assembly as previously described, wherein the vehicle is preferably configured as a commercial vehicle, a truck, a trailer, a bus and/or as a combination of a towing vehicle and a trailer, and/or wherein the vehicle preferably comprises a pure electric, a hybrid or a conventional powertrain.

Commercial vehicles are particularly associated with comparably larger and heavier components. Accordingly, the use of the brake assembly as previously described for commercial vehicles allows to enhance compactness and design flexibility. Further, in the event of electrically powered or hybrid vehicles, the installation space for a brake assembly may be further reduced. The use of the previously described brake assembly, specifically, the park brake assembly may therefore contribute to a reduction in installation space requirements or may allow a more flexible distribution of the respective components within the available space.

Further advantages, aspects and details of the invention are subject to the claims, the following description of exemplary embodiments applying the principles of the invention, and the respective exemplary drawings.
**Figure** 1 is a lateral view of a brake assembly according to a first exemplary embodiment of a brake assembly the present invention is applicable to;
**Figure** 2 is a lateral view of a brake assembly according to a second exemplary embodiment of a brake assembly the present invention is applicable to;
**Figure** 3 is a lateral view of a brake assembly according to a third exemplary embodiment of a brake assembly the present invention is applicable to;
**Figure** 4 is a cross-sectional view of a section of a park brake assembly applicable to the brake assembly according to Figure 3;
**Figure** 5 is a lateral view of a brake disc according to an exemplary embodiment the present invention is applicable to;
**Figure** 6 is a cross-sectional view of a section of the brake disc according to Figure 5;
**Figure** 7 is a lateral view of a brake assembly according to a fourth exemplary embodiment of a brake assembly the present invention is applicable to;
**Figure** 8 is a cross-sectional view of a section of a park brake assembly applicable to the brake assembly according to Figure 7;
**Figure** 9 is a cross-sectional view of a section of a brake assembly according to a fifth exemplary embodiment of a brake assembly in accordance with the present invention;
**Figure 10** is a cross-sectional view of a section of the brake assembly according to a sixth exemplary embodiment of a brake assembly in accordance with the present invention;
**Figure 11** is a cross-sectional top view of a section of the brake assembly according to Figure 3;
**Figures 12a to 12e** are schemes of operation for the engagement of a park brake pad form-fit portion of a park brake pad into a brake disc form-fit portion of a brake disc according to Figures 3 and 11 in a comparably advantageous scenario;
**Figures 13a to 13e** are schemes of operation for the engagement of a park brake pad form-fit portion of a park brake pad into a brake disc form-fit portion of a brake disc according to Figures 3 and 11 in a comparably disadvantageous scenario;
**Figures 14a to 14d** are schemes of operation for the engagement of a park brake pad form-fit portion of a park brake pad into a brake disc form-fit portion of a brake disc using a clutch; and
**Figures 15a to 15c** are schemes of operation for the engagement of a park brake pad form-fit portion of a park brake pad into a brake disc form-fit portion of a brake disc using an axial spring member.

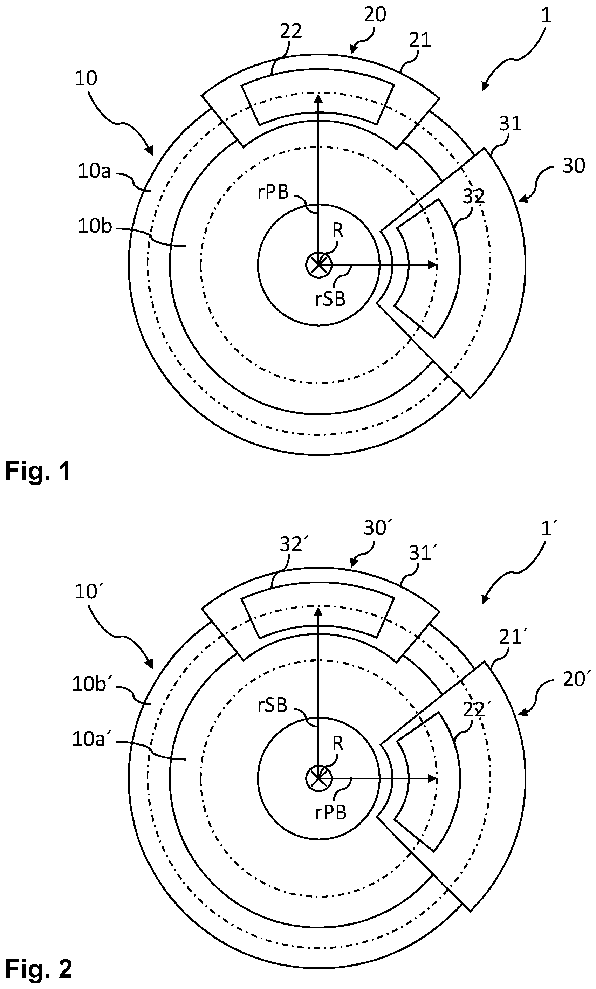

**Figure 1** shows a lateral view of a brake assembly 1 according to a first exemplary embodiment the present invention is applicable to. The brake assembly 1 comprises a brake disc 10 rotatable about a rotational axis R. Here, the lateral view corresponds to a view in the direction of the rotational axis R on a radial surface side of the brake disc with respect to the rotational axis R. The brake assembly 1 further comprises a park brake assembly 20 comprising a park brake caliper 21 as a park brake pad carrier assembly to carry a park brake pad 22. In the exemplary embodiment, the park brake caliper 21 is a floating caliper further carrying another park brake pad (not shown) on an opposed radial surface side of the brake disc 10. However, in other embodiments, the park brake caliper 21 may be a fixed caliper or may be a park brake pad carrier assembly for only one or more than two park brake pads. The brake assembly 1 also comprises a service brake assembly 30 comprising a service brake caliper 31 as a service brake pad carrier assembly to carry a service brake pad 32. Similar to the park brake caliper 21, the service brake caliper 31 is a floating caliper with another service brake pad arranged on the opposed radial surface side of the brake disc 10 (not shown) in the exemplary embodiment. In alternative embodiments, the service brake caliper may also be a fixed caliper or may be a service brake pad carrier assembly for only one or more than two service brake pads. Each of the park brake caliper 21 and service brake caliper 31 comprises or may be operatively connected to an actuator mechanism to move the respective park brake pad 22 or the service brake pad 32, respectively, each of which being axially movably supported in the park brake caliper 21 or service brake caliper 31, respectively, in the axial direction with respect to the rotational axis R toward the brake disc 10 to apply a clamping force upon contact.

In the exemplary embodiment, the park brake pad 22 is arranged in a radial park brake pad distance rPB, which is the distance of the rotational axis R to the mid-height of the park brake pad 22 in the radial direction. Further, the service brake pad 32 is arranged in a radial service brake pad distance rSB, which is the distance of the rotational axis R to the mid-height of the service brake pad 32 in the radial direction. Here, the radial park brake pad distance rPB is more than the radial service brake pad distance rSB. Specifically, the park brake pad 22 and the service brake pad 32 are configured and arranged such that each of the park brake pad 22 and the service brake pad 32 act on different circumferential brake disc portions without overlap. In other words, the park brake pad 22 and the service brake pad 32 are configured and arranged such that an outer radial distance of the service brake pad 32 is less than an inner radial distance of the park brake pad 22. In alternative embodiments, the park brake pad 22 and the service brake pad 32 may provide some overlap in terms of being configured and arranged to partially act on the same circumferential brake disc portion.

Since the radial park brake pad distance rPB is more than the radial service brake pad distance rSB, the radial park brake pad distance rPB as a lever or lever arm vector with respect to torque with respect to the rotational axis R requires a smaller clamping force for the park brake pad 22 to achieve the same braking torque with respect to the service brake pad 32 arranged in a radial service brake pad distance rSB as a lever with respect to a torque around the rotational axis R less than the radial park brake pad distance. In the exemplary embodiment, but not necessarily, the brake disc 10 comprises a park brake brake disc portion 10a as an outer annular portion extending circumferentially around the rotational axis R for a frictional pairing with the park brake pad 22 and a service brake brake disc portion 10b as an inner annular portion extending circumferentially around the rotational axis R for a frictional pairing with the service brake pad 32, wherein the friction coefficient of the service brake brake disc portion 10b is higher than the friction coefficient of the park brake brake portion 10a to at least partially compensate the smaller lever due to the radial service brake pad distance rSB to reduce the required clamping force. However, in alternative embodiments, the friction coefficient of the park brake brake disc portion 10a is higher than the friction coefficient of the service brake brake portion 10b to further decrease the required clamping force.

**Figure 2** shows a lateral view of a brake assembly 1' according to a second exemplary embodiment the present invention is applicable to. The reference signs denote the same features as in the first embodiment but indicated by " ' ". Accordingly, a detailed description of the common features is omitted. The second embodiment differs from the first embodiment in the arrangement and configuration of the park brake pad 22' and the service brake pad 32' and the respective park brake brake disc portion 10a' and service brake brake disc portion 10b'. here, the park brake pad is arranged in a radial park brake pad distance rPB less than the radial service brake pad distance rSB. Accordingly, the clamping force for the park brake pad 22' to achieve the same braking torque than the service brake pad 32' needs to be higher. Similar to the first embodiment, the park brake brake disc portion 10a' as inner annular portion provides a higher friction coefficient than the service brake brake disc portion 10b' as outer annular ring portion to at least partially compensate such effect.

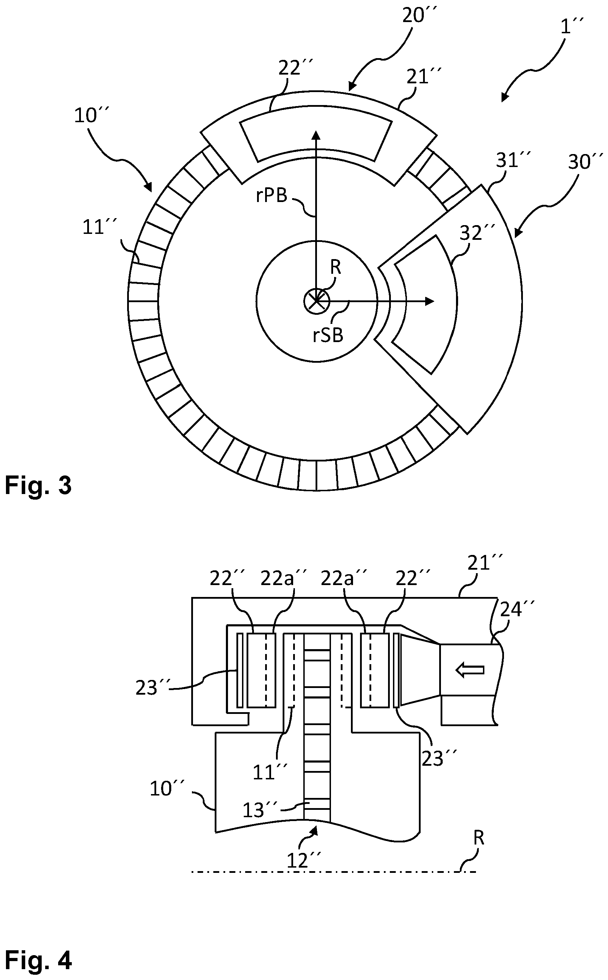

**Figure 3** shows a lateral view of a brake assembly 1" according to a third exemplary embodiment the present invention is applicable to. The reference signs denote the same features as in the first embodiment but indicated by " *"* ". Accordingly, a detailed description of the common features is omitted. The third embodiment differs from the first embodiment in that the brake disc 10" comprises a brake disc form-fit portion 11" as an annular portion extending circumferentially around the rotational axis R to provide a form-fit connection with a corresponding park brake pad form-fit portion 22a" (Figure 4) to further support the previously described friction-based park braking function. In the exemplary embodiment, the brake disc form-fit portion 11" is formed by serrations with equally distanced teeth in the circumferential direction.

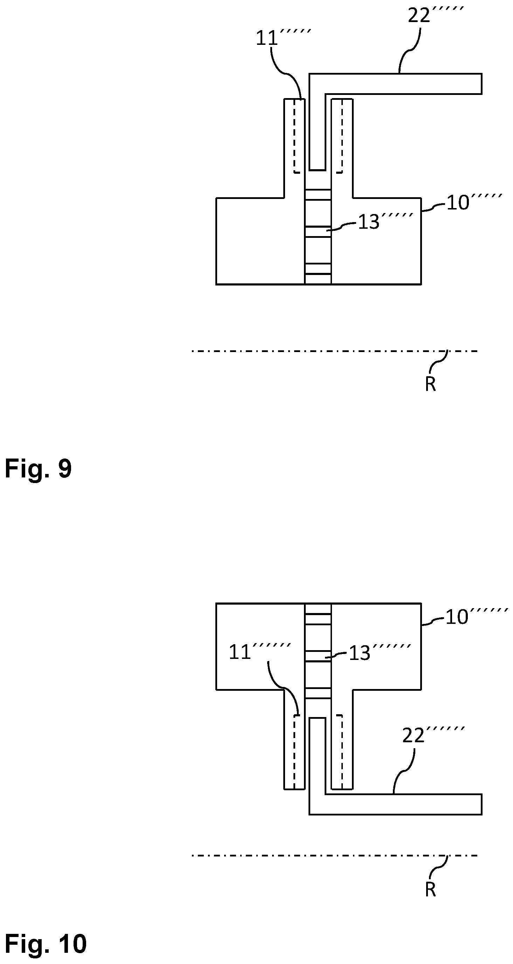

**Figure 4** shows a cross-sectional view of a section of a park brake assembly applicable to the brake assembly 1" according to Figure 3. The park brake assembly comprises a park brake caliper 21" accommodating an actuator 24" movable in the axial direction with respect to the rotational axis R to move the park brake pads 22", each of which is arranged on an opposed radial surface side of the brake disc 10" toward the brake disc 10". The one park brake pad 22" arranged between the one radial surface side of the brake disc 10" and the actuator 24" is directly actuated by the actuator 24", whereas the other park brake pad 22" is indirectly actuated due to the park brake caliper 21" configured as floating caliper. In the exemplary embodiment, a transfer member 23" is arranged on each surface side of the respective park brake pads 22" facing away from the brake disc 10" in the axial direction. In the exemplary embodiment, the transfer members 23 represent the bearing members 25 or rollers, respectively, which will be described in more detail with respect to Figure 9. However, in other embodiments, the transfer members 23 may comprise other functionalities to actuate, support and/or guide the park brake pads 22. Each of the park brake pads 22" comprises the park brake pad form-fit portion 22a", each of which facing toward a corresponding brake disc form-fit portion 11" on each outer radial surface side of the brake disc 10". The brake disc 10" further comprises a cooling channel 12" which is formed by a distance between two outer portions of the brake disc 10" extending radially connected by a plurality of connecting members 13". In the exemplary embodiment, the connecting members 13" form an integral part of the brake disc 10".

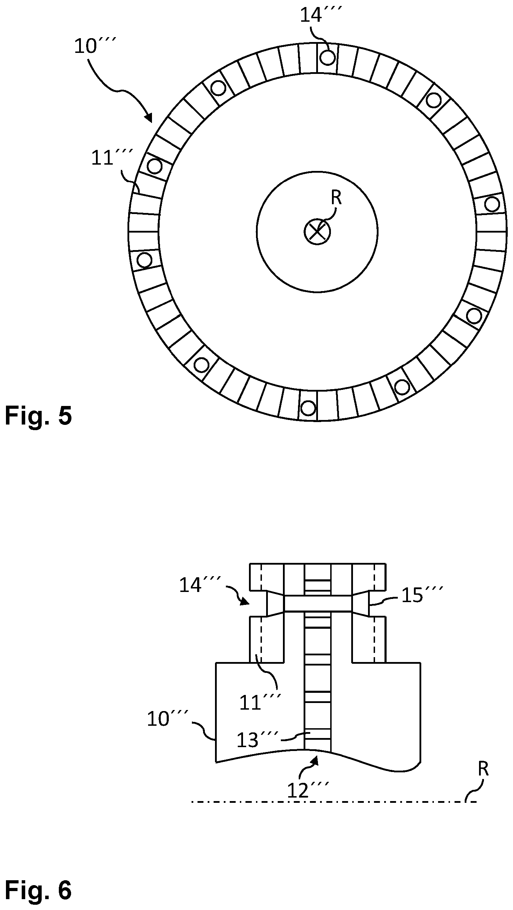

**Figure 5** shows a lateral view of brake disc 10‴ according to an exemplary embodiment. In this variant, the brake disc 10‴ comprises several mounting holes 14‴ to mount a brake disc form-fit portion as separate annular member on the brake disc 10‴.

**Figure 6** shows a cross-sectional view of a section of the brake disc 10‴ according to Figure 5. The reference signs denote the same features as in Figure 4 but indicated by " ‴ ". Accordingly, a detailed description of the common features is omitted. In accordance with the description of Figure 5, the shown embodiment of the brake disc 10‴in Figure 6 differs from the embodiment of the brake disc 10" in Figure 4 in that the brake disc form-fit portion 11‴ is mounted on the brake disc 10‴, here, by mounting members 15‴such as screws, bolts, rivets or the like.

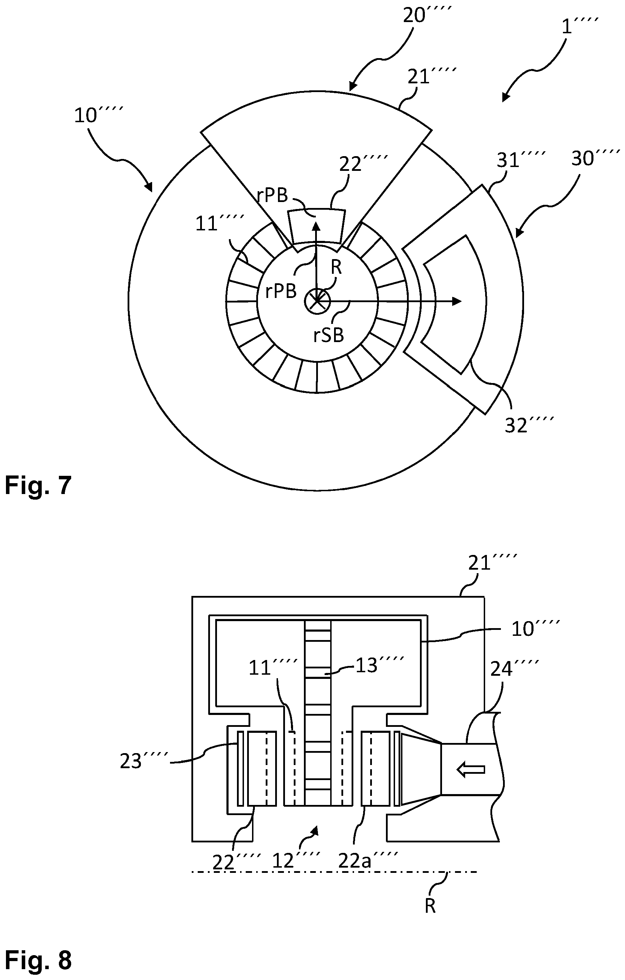

**Figure 7** shows a lateral view of a brake assembly 1ʺʺ according to a fourth exemplary embodiment the present invention is applicable to. The reference signs denote the same features as in the second embodiment but indicated by " "" ". Accordingly, a detailed description of the common features is omitted. The fourth embodiment differs from the first embodiment in that the brake disc 10ʺʺ comprises a brake disc form-fit portion 11ʺʺ as an annular portion extending circumferentially around the rotational axis R to provide a form-fit connection with a corresponding park brake pad form-fit portion 22aʺʺ (Figure 8) to further support the previously described friction-based park braking function. In the exemplary embodiment, the brake disc form-fit portion 11ʺʺ is formed by serrations with equally distanced teeth in the circumferential direction. While the brake disc form-fit portion 11" in Figure 3 is provided as an outer annular portion, the brake disc form-fit portion 11ʺʺ in Figure 7 is an inner annular portion to comply with the smaller radial park brake pad distance rPB.

**Figure 8** shows a cross-sectional view of a section of a park brake assembly applicable to the brake assembly 1ʺʺ according to Figure 7. The park brake assembly in Figure 8 differs from the park brake assembly shown in Figure 4 by the frictional pairing and the form-fit pairing of the brake disc 10ʺʺ and the park brake pad 22ʺʺ being provided at an inner annular portion of the brake disc 10ʺʺ.

**Figure 9** shows a cross-sectional view of a section of a brake assembly according to a fifth exemplary embodiment of a brake assembly in accordance with the present invention. Here, the park brake bad 22ʺʺ partially extends in the cooling channel from an outer circumference of the brake disc 10‴ʺ. The park brake pad 22‴ʺ is axially movable with respect to the rotational axis to contact an inner radial surface side of the cooling channel, which, in the exemplary embodiment further comprises a brake disc form-fit portion 11‴ʺ corresponding to a park brake pad form-fit portion (not shown). However, in other embodiments, the park brake pad 22‴ʺand the brake disc 10‴ʺmay only provide a frictional pairing. The park brake pad 22‴ʺ is moveable to only one inner radial surface side of the brake disc 10‴ʺ for applying a clamping force. However, in other embodiments, the park brake pad 22‴ʺ may also be actuated to apply a clamping force on either the one or the other inner radial surface side of the brake disc 10‴ʺ. In further embodiments, the park brake pad 22‴ʺ may comprise two park brake braking surfaces to be spread apart in the axial direction to simultaneously apply a clamping force on both inner radial surface sides of the brake disc 10‴ʺ, which may also be accomplished by two separate park brake pads 22‴ʺ both extending in the cooling channel.

**Figure 10** shows a cross-sectional view of a section of the brake assembly according to a sixth exemplary embodiment in accordance with the present invention. The reference signs denote the same features as in Figure 9 but indicated by " ‴‴ ". Accordingly, a detailed description of the common features is omitted. The sixth embodiment differs from the fifth embodiment in that the park brake pad 22‴ extends in the cooling channel from an inner circumference of the brake disc 10‴‴. The same principles as described above for the fifth embodiment also apply for the sixth embodiment with respect to actuation of the park brake pad 22‴‴ to apply a clamping force on the brake disc 10‴‴.

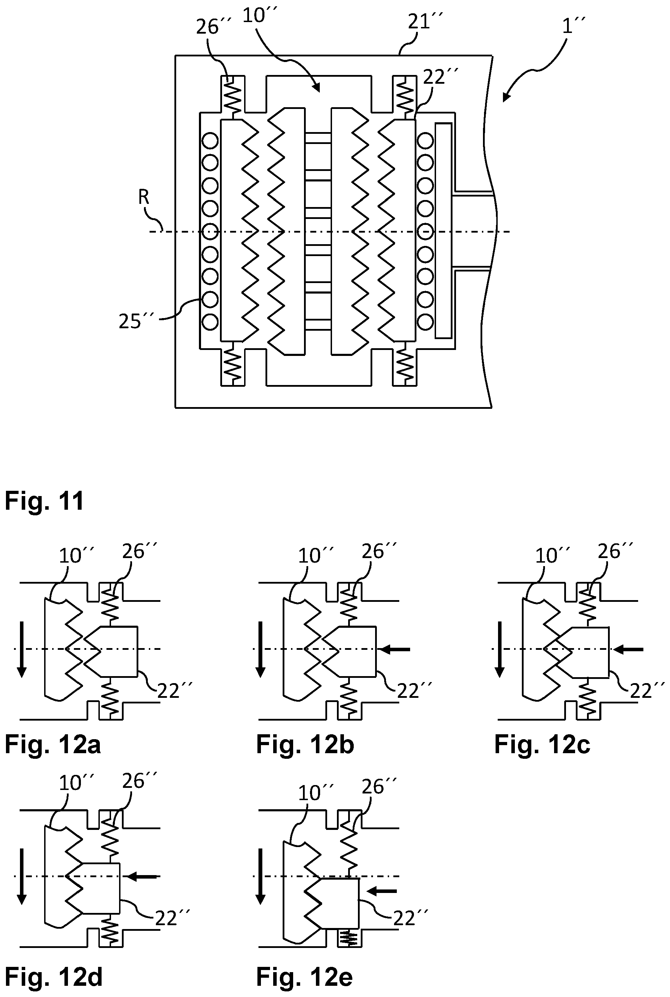

**Figure 11** shows a cross-sectional top view of a section of the brake assembly 1" according to Figure 3. Since the park brake pad form-fit portion 22a" (Figure 3) of the park brake pad 22" may not be precisely aligned with the brake disc form-fit portion 11" (Figure 3), the park brake caliper 21" comprises bearing members 25" disposed on a surface side of the park brake pad 22" facing away from the radial surface sides of the brake disc 10" and supported by the park brake caliper 21". Further, the park brake caliper 21" comprises a spring member 26" on each lateral side of each of the park brake pads 22" to provide a resilient connection of the park brake pads 22" with the park brake caliper 21" in a projection direction of the rotational movement of the brake disc 10" perpendicular to the rotational axis R and perpendicular to the radial direction with respect to the rotational axis R. The spring members 26" are each partially accommodated in a recess of the park brake caliper 21", the open end of which also partially functions as an abutment for the respective park brake pad 22" to limit a moving ability in the projection direction. The spring members 26" are configured and arranged to center the respective park brake pad 22" in the middle position within the park brake caliper 21" in the projection direction, when the parking brake pad 22" is not actuated, so to provide the park brake pad form-fit portion with sufficient available travel to align with the brake disc form-fit portion.

**Figures 12a to 12e** show schemes of operation for the engagement of a park brake pad form-fit portion 22a" of the park brake pad 22" into a brake disc form-fit portion 11" of a brake disc 10" according to Figures 3 and 11 in a comparably advantageous scenario. In principle, the spring members 26" and bearing members 25" allow the parking brake pads 22" to get substantially immediately in contact with the brake disc 10" when the park brake assembly is actuated accordingly. However, for a transfer of the clamping forces, the brake disc 10" may slightly have to turn to overcome the clearance between the park brake pads 22" and the park brake caliper 21", which results in an "unbraked travel". In an advantageous scenario, the park brake pad 22" according to Figure 12a without being actuated is centered by the spring members 26". Upon actuating, as indicated by the arrow directed in the axial direction, the park brake pad 22" is moved toward the brake disc 10" in the axial direction with respect to the rotational axis R (Figure 12b). Figure 12c shows the initial contact of the park brake pad form-fit portion with the brake disc form-fit portion. The park brake pad form-fit portion fully engages the brake disc form-fit portion while the brake disc 10" further rotates, which causes the park brake pad 22" to move in the projection direction of the rotational movement, indicated by the vertical arrow (Figure 12d). Accordingly, the spring member 26" upstream in the projection direction is extended while the spring member 26" downstream in the projection direction is compressed. The unbraked travel of the brake disc 10" stops when the park brake pad 22" abuts at the park brake caliper 21" or when the clearance between the park brake pad 22" and the park brake caliper 21" in the projection direction is closed, respectively.

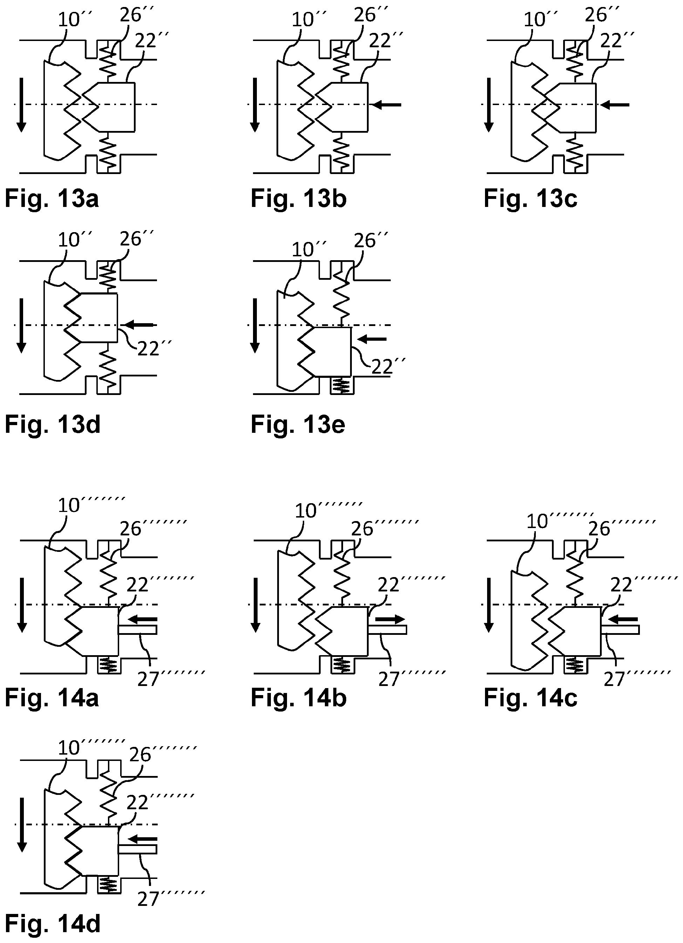

**Figures 13a to 13e** show schemes of operation for the engagement of a park brake pad form-fit portion of a park brake pad 22" into a brake disc form-fit portion of a brake disc according to Figures 3 and 11 in a comparably disadvantageous scenario. Figures 13a and 13b substantially correspond to Figures 12a and 12b, a description of which is therefore omitted. As per Figure 13c, the initial contact of the park brake pad 22" with the brake disc 10" urges the park brake pad form-fit portion to engage the brake disc form-fit portion at a serration upstream of the brake disc form-fit portion with respect to the rotation direction or projection direction, respectively. Accordingly, the park brake pad 22" is first moved slightly upstream before it is moved in the final abutment with the park brake caliper 21 ", as illustrated by Figures 13d and 13e. Consequently, the unbraked travel of the brake disc 10" is longer than in the more advantageous scenario. Accordingly, the clearance between the park brake pad 22" and the park brake caliper 21" is configured to keep the unbraked travel of the brake disc 10" at a predetermined maximum for such unbraked in any event.

**Figures 14a to 14d** show schemes of operation for the engagement of a park brake pad form-fit portion of a park brake pad into a brake disc form-fit portion of a brake disc 10‴ʺʺ. using an overload clutch 27‴ʺʺ. The configuration of the respective park brake assembly corresponds to the ones of Figures 12a-e and 13a-e besides the additional overload clutch 27‴ʺʺ. Figure 14a illustrates a position of the park brake pad 22‴ʺʺ as per Figure 12e or Figure 13e, respectively. If the braking torque becomes too high, i.e. exceeds a predetermined torque threshold, the overload clutch 27‴ʺʺ allows the park brake pad 22‴ʺʺ to move away from the brake disc 10‴ʺʺ. as shown in Figure 14b. According to Figure 14c, with the braking torque being released from the park brake pad 22‴ʺʺ, the park brake pad 22‴ʺʺ is moved back toward the brake disc 10‴ʺʺ and returns to the clamping state as per Figure 14d.

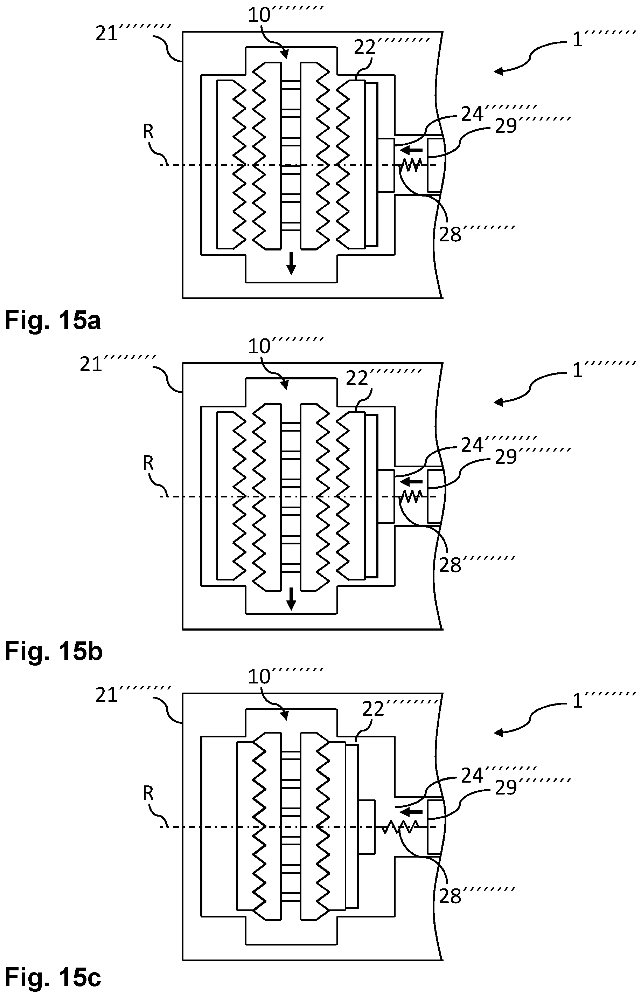

**Figures 15a to 15c** show schemes of operation for the engagement of a park brake pad form-fit portion of a park brake pad into a brake disc form-fit portion of a brake disc 10‴‴ʺ using an axial spring member 28‴‴ʺ. The axial spring member is arranged between the actuator 24‴‴ʺ and an axial spring member support 29‴‴ʺ to preload the actuator 24‴‴ʺ in the axial direction with respect to the rotational axis R. In the event that the park brake pad form-fit portion does not precisely align with the brake disc form-fit portion upon actuation of the park brake pad 22‴‴ʺ to engage the brake disc 10‴‴ʺ, the brake disc 10‴ʺʺ slides relative to the park brake pad to the next section of the park brake pad form-fit portion, e.g. the next serration section, and the park brake pad form-fit portion may snap into the brake disc form-fit portion accordingly to transfer the clamping force. The axial spring member 28‴‴ʺ thereby allows the same overload clutch function as the overload clutch 27‴ʺʺ as previously described.

The invention has been described with respect to exemplary embodiments. However, the invention is not limited to the exemplary embodiments.

### ARTIKEL I. LIST OF REFERENCE SIGNS

- 1, 1', 1", 1ʺʺ, 1‴‴ʺ: brake assembly
- 10, 10', ..., 10‴ʺʺ: brake disc
- 10a, 10a': park brake brake disc portion
- 10b, 10b': service brake brake disc portion
- 11", ..., 11‴‴: brake disc form-fit portion
- 12", 12‴, 12ʺʺ: cooling channel
- 13", ..., 13""": connecting member
- 14‴: mounting hole
- 15‴: mounting member
- 20, 20', 20", 20"": park brake assembly
- 21, 21', 21", 21ʺʺ, 21‴‴ʺ: park brake caliper (park brake pad carrier assembly)
- 22, 22', 22", 22"", ..., 22‴‴ʺ: park brake pad
- 22a", 22a"": park brake pad form-fit portion
- 23": transfer member
- 24", 24ʺʺ, 24‴‴ʺ: actuator
- 25": bearing member
- 26", 26‴ʺʺ: spring member
- 27‴ʺʺ: overload clutch
- 28‴‴ʺ: axial spring member
- 29‴‴ʺ: axial spring member support
- 30, 30', 30", 30"": service brake assembly
- 31, 31', 31", 31ʺʺ: service brake caliper (service brake pad carrier assembly)
- 32, 32', 32", 32"": service brake pad
- R: rotational axis
- rPB: radial park brake pad distance
- rSB: radial service brake pad distance

## Claims

1. Brake assembly (1, 1', 1", 1"", 1‴‴ʺ) for a vehicle, comprising:
a brake disc (10, 10', ..., 10‴‴ʺ) rotatable about a rotational axis (R),
at least one service brake assembly (30, 30', 30", 30ʺʺ) comprising at least one service brake pad (32, 32', 32", 32"") and configured to apply a service brake force on a radial surface side of the brake disc (10, 10', ..., 10‴‴ʺ), wherein the at least one service brake pad (32, 32', 32", 32ʺʺ) is axially moveable with respect to the rotational axis (R) and comprises a service brake braking surface facing the radial surface side of the brake disc (10, 10', ..., 10‴‴) to apply the service brake force, and
at least one park brake assembly (20, 20', 20", 20ʺʺ) comprising at least one park brake pad (22, 22', 22", 22"", ..., 22‴‴ʺ) and configured to apply a park brake force on the or another radial surface side of the brake disc (10, 10', ..., 10‴‴ʺ), wherein the at least one park brake pad (22, 22', 22", 22"", ..., 22‴‴ʺ) is axially moveable with respect to the rotational axis (R) and comprises a park brake braking surface facing the or the other radial surface side of the brake disc (10, 10', ..., 10""") to apply the park brake force,
wherein the park brake braking surface of the at least one park brake pad (22, 22', 22", 22"", ..., 22‴‴ʺ) is arranged at a radial park brake pad distance (rPB) with respect to the rotational axis (R) different from a radial service brake pad distance (rSB) of the a service brake braking surface of the at least one service brake pad (32, 32', 32", 32ʺʺ), **characterized in that**
the at least one park brake pad (22", 22ʺʺ) is arranged to extend in a cooling channel (12", 12‴, 12ʺʺ) of the brake disc (10", 10"', 10"") formed between two outer radial surface sides of the brake disc (10", 10‴, 10"") from an outer circumference or an inner circumference of the brake disc (10", 10‴, 10ʺʺ).

2. Brake assembly (1, 1", 1‴‴ʺ) according to claim 1, wherein the radial park brake pad distance (rPB) is more than the radial service brake pad distance (rSB) relative to the rotational axis (R).

3. Brake assembly (1', 17ʺʺ, 1‴‴ʺ) according to claim 1, wherein the radial park brake pad distance (rPB) is less than the radial service brake pad distance (rSB) relative to the rotational axis (R).

4. Brake assembly (1, 1', 1", 1"", 1‴‴ʺ) according to any one of the preceding claims, wherein the brake disc (10, 10', ..., 10‴‴ʺ) comprises a park brake brake disc portion (10a, 10a') facing the park brake braking surface of the at least one park brake pad (22, 22', 22", 22ʺʺ, ..., 22‴‴ʺ) in at least one rotational position of the brake disc (10, 10', ..., 10‴‴ʺ), and a service brake brake disc portion (10b, 10b') facing the service brake braking surface of the at least one service brake pad (32, 32', 32", 32ʺʺ) in the at least one or in at least one other rotational position of the brake disc (10, 10', ..., 10‴‴ʺ), and wherein a frictional pairing of the park brake brake disc portion (10a, 10a') and the park brake braking surface of the at least one park brake pad (22, 22', 22", 22ʺʺ, ..., 22‴‴ʺ) is configured to provide a friction coefficient different from the friction coefficient of a frictional pairing of the service brake brake disc portion (10b, 10b') and the service brake braking surface of the at least one service brake pad (32, 32', 32", 32ʺʺ).

5. Brake assembly (1, 1', 1", 1ʺʺ, 1‴‴ʺ) according to any one of the preceding claims, wherein the friction coefficient of the frictional pairing of the park brake braking surface of the at least one park brake pad (22, 22', 22", 22"", ..., 22‴‴ʺ) and the brake disc (10, 10', ..., 10‴‴ʺ) is at least 0.55.

6. Brake assembly (1", 1ʺʺ) according to any one of the preceding claims, wherein the brake assembly comprises the park brake assembly comprising the at least one park brake pad (22", 22ʺʺ) arranged to extend in a cooling channel (12", 12‴, 12"") of the brake disc (10", 10‴, 10"") and another park brake assembly.

7. Brake assembly (1", 1"", 1‴‴ʺ) according to any one of the preceding claims, wherein the park brake braking surface of the at least one park brake pad (22", 22"", ..., 22‴‴ʺ) comprises a park brake pad form-fit portion (22a", 22a""), and the brake disc (10", ..., 10‴‴ʺ) comprises a corresponding brake disc form-fit portion (11", ..., 11‴‴‴) at the radial park brake pad distance (rPB).

8. Brake assembly (1", 1ʺʺ, 1‴‴ʺ) according to claim 7, wherein the park brake assembly (20", 20"") comprises a park brake pad carrier assembly (21", 21ʺʺ, 21‴‴ʺ) carrying the at least one park brake pad (22", 22"", ..., 22‴‴ʺ) and configured to move the at least one park brake pad (22", 22ʺʺ, ..., 22"""") toward the brake disc (10", ..., 10‴‴) in the axial direction or to allow a respective movement of the at least one park brake pad (22", 22"", ..., 22‴‴ʺ), and wherein the park brake assembly (20", 20ʺʺ) comprises at least one local displacement member (25", 26", 26‴ʺʺ) arranged between the at least one park brake pad (22", 22"", ..., 22‴‴ʺ) and the park brake pad carrier assembly (21", 21 "", 21‴‴ʺ) configured to allow a relative displacement of the at least one park brake pad (22", 22"", ..., 22‴‴ʺ) with respect to the park brake pad carrier assembly (21", 21"", 21‴‴ʺ) in a direction within the braking surface plane.

9. Brake assembly (1") according to claim 8, wherein the at least one local displacement member (25") is a bearing member (25") arranged on a surface side of the at least one park brake pad (22") opposed to the braking surface of the at least one park brake pad (22").

10. Brake assembly (1") according to claim 8 or 9, wherein the at least one local displacement member (26", 26‴ʺʺ) is a spring member (26", 26‴ʺʺ) arranged on a lateral surface side of the at least one park brake pad (22", 22"", ..., 22‴‴ʺ) substantially in parallel to the axial direction and perpendicular to a projection of the rotational movement of the brake disc (10", ..., 10""") in parallel to the at least one park brake pad (22", 22"", ..., 22‴‴ʺ) with a respective spring force acting in the direction of the projection of the rotational movement of the brake disc (10", ..., 10‴‴) in parallel to the at least one park brake pad (22, 22', ..., 22‴ʺ).

11. Brake assembly (1", 1ʺʺ, 1‴‴ʺ) according to any one of the claims 8 to 10, wherein the park brake assembly (20", 20ʺʺ) comprises an overload clutch (27‴ʺʺ) arranged on the surface side of the at least one park brake pad (22‴ʺʺ) opposed to the braking surface of the at least one park brake pad (22‴ʺʺ).

12. Brake assembly (1", 1ʺʺ, 1‴‴ʺ) according to any one of the claims 8 to 11, wherein the park brake assembly (20", 20ʺʺ) comprises an axial spring member (28‴‴ʺ) arranged on the surface side of the at least one park brake pad (22‴‴ʺ) opposed to the braking surface of the at least one park brake pad (22‴‴ʺ) with a predetermined axial spring force acting in the axial direction.

13. Method for applying a park brake force on a radial surface side of a brake disc (10, 10', ..., 10"""") of a brake assembly (1", 1ʺʺ) according to any one of the claims 1 to 12, **characterized in that** the at least one park brake pad (22", 22ʺʺ) of the brake assembly (1", 1ʺʺ) is only activated to apply the park brake force in a standstill state of a vehicle.

14. Vehicle comprising a brake assembly (1, 1", 1‴‴) according to one of the claims 1 to 12,
wherein the vehicle is preferably configured as a commercial vehicle, a truck, a trailer, a bus and/or as a combination of a towing vehicle and a trailer, and/or
wherein the vehicle preferably comprises a pure electric, a hybrid or a conventional powertrain.

## Patentansprüche

1. Bremsanordnung (1, 1', 1", 1"", 1‴‴ʺ) für ein Fahrzeug, umfassend:
eine Bremsscheibe (10, 10', ..., *10""""),* die um eine Drehachse (R) drehbar ist,
mindestens eine Betriebsbremsanordnung (30, 30', 30", 30ʺʺ), die mindestens einen Betriebsbremsbelag (32, 32', 32", 32ʺʺ) umfasst und konfiguriert ist, um eine Betriebsbremskraft auf eine radiale Oberflächenseite der Bremsscheibe (10, 10', ..., 10‴‴ʺ) anzulegen, wobei der mindestens eine Betriebsbremsbelag (32, 32', 32", 32ʺʺ) in Bezug auf die Drehachse (R) axial beweglich ist und eine Betriebsbremsen-Bremsoberfläche umfasst, die der radialen Oberflächenseite der Bremsscheibe (10, 10', ..., 10‴‴ʺ) zugewandt ist, um die Betriebsbremskraft anzulegen, und
mindestens eine Feststellbremsanordnung (20, 20', 20", 20ʺʺ), die mindestens einen Feststellbremsbelag (22, 22', 22", 22ʺʺ, 22‴‴ʺ) umfasst und konfiguriert ist, um eine Feststellbremskraft auf die oder eine andere radiale Oberflächenseite der Bremsscheibe (10, 10', ..., 10‴‴ʺ) anzulegen, wobei der mindestens eine Feststellbremsbelag (22, 22', 22", 22ʺʺ, ..., 22‴‴ʺ) in Bezug auf die Drehachse (R) axial beweglich ist und eine Feststellbremsen-Bremsoberfläche umfasst, die der oder der anderen radialen Oberflächenseite der Bremsscheibe (10, 10', ..., 10‴‴) zugewandt ist, um die Feststellbremskraft anzulegen,
wobei die Feststellbremsen-Bremsoberfläche des mindestens einen Feststellbremsbelags (22, 22', 22", 22ʺʺ, ..., 22‴‴ʺ) in einem radialen Feststellbremsbelagsabstand (rPB) in Bezug auf die Drehachse (R) angeordnet ist, der sich von einem radialen Betriebsbremsbelagsabstand (rSB) der Betriebsbremsen-Bremsoberfläche des mindestens einen Betriebsbremsbelags (32, 32', 32", 32ʺʺ) unterscheidet, **dadurch gekennzeichnet, dass**
der mindestens eine Feststellbremsbelag (22", 22ʺʺ) angeordnet ist, um sich in einem Kühlkanal (12", 12"', 12ʺʺ) der Bremsscheibe (10", 10‴, 10ʺʺ) zu erstrecken, der zwischen zwei äußeren radialen Oberflächenseiten der Bremsscheibe (10", 10‴, 10ʺʺ) von einem Außenumfang oder einem Innenumfang der Bremsscheibe (10", 10‴, 10ʺʺ) gebildet ist.

2. Bremsanordnung (1, 1", 1‴‴ʺ) nach Anspruch 1, wobei der radiale Feststellbremsbelagsabstand (rPB) größer als der radiale Betriebsbremsbelagsabstand (rSB) in Bezug zur Drehachse (R) ist.

3. Bremsanordnung (1', 1ʺʺ, 1‴‴ʺ) nach Anspruch 1, wobei der radiale Feststellbremsbelagsabstand (rPB) kleiner als der radiale Betriebsbremsbelagsabstand (rSB) in Bezug zur Drehachse (R) ist.

4. Bremsanordnung (1, 1', 1 ", 1 ʺʺ, 1‴‴ʺ) nach einem der vorstehenden Ansprüche, wobei die Bremsscheibe (10, 10', ..., 10‴‴ʺ) einen in mindestens einer Drehposition der Bremsscheibe (10, 10', ..., 10‴‴ʺ) der Feststellbremsen-Bremsoberfläche des mindestens einen Feststellbremsbelags (22, 22', 22", 22ʺʺ, ..., 22‴‴ʺ) zugewandten Feststellbremsen-Bremsscheibenabschnitt (10a, 10a') und einen in der mindestens einen oder in mindestens einer anderen Drehposition der Bremsscheibe (10, 10', ..., 10‴‴ʺ) der Betriebsbremsen-Bremsoberfläche des mindestens einen Betriebsbremsbelags (32, 32', 32", 32ʺʺ) zugewandten Betriebsbremsen-Bremsscheibenabschnitt (10b, 10b') umfasst, und wobei eine Reibpaarung des Feststellbremsen-Bremsscheibenabschnitts (10a, 10a') und der Feststellbremsen-Bremsoberfläche des mindestens einen Feststellbremsbelags (22, 22', 22", 22ʺʺ, ..., 22‴‴ʺ) konfiguriert ist, um einen Reibungskoeffizienten bereitzustellen, der sich von dem Reibungskoeffizienten einer Reibpaarung des Betriebsbremsen-Bremsscheibenabschnitts (10b, 10b') und der Betriebsbremsen-Bremsoberfläche des mindestens einen Betriebsbremsbelags (32, 32', 32", 32ʺʺ) unterscheidet.

5. Bremsanordnung (1, 1', 1", 1ʺʺ, 1‴‴ʺ) nach einem der vorstehenden Ansprüche, wobei der Reibungskoeffizient der Reibpaarung der Feststellbremsen-Bremsoberfläche des mindestens einen Feststellbremsbelags (22, 22', 22", 22ʺʺ, ..., 22‴‴ʺ) und der Bremsscheibe (10, 10', ..., 10‴‴ʺ) mindestens 0,55 beträgt.

6. Bremsanordnung (1", 1ʺʺ) nach einem der vorstehenden Ansprüche, wobei die Bremsanordnung die Feststellbremsanordnung, die den mindestens einen Feststellbremsbelag (22", 22ʺʺ) umfasst, der angeordnet ist, um sich in einem Kühlkanal (12", 12‴, 12ʺʺ) der Bremsscheibe (10", 10‴, 10ʺʺ) zu erstrecken, und eine andere Feststellbremsanordnung umfasst.

7. Bremsanordnung (1", 1ʺʺ, 1‴‴ʺ) nach einem der vorstehenden Ansprüche, wobei die Feststellbremsen-Bremsoberfläche des mindestens einen Feststellbremsbelags (22", 22ʺʺ, ..., 22‴‴ʺ) einen Feststellbremsbelag-Formschlussabschnitt (22a", 22aʺʺ) umfasst und die Bremsscheibe (10", .... 10‴‴ʺ) einen entsprechenden Bremsscheiben-Formschlussabschnitt (11", ..., 11‴‴) im radialen Feststellbremsbelagabstand (rPB) umfasst.

8. Bremsanordnung (1", 1"", 1‴‴ʺ) nach Anspruch 7, wobei die Feststellbremsanordnung (20", 20ʺʺ) eine Feststellbremsbelagträgeranordnung (21", 21ʺʺ, 21‴‴ʺ) umfasst, die den mindestens einen Feststellbremsbelag (22", 22ʺʺ, ..., 22‴‴ʺ) trägt und konfiguriert ist, um den mindestens einen Feststellbremsbelag (22", 22ʺʺ, ..., 22‴‴ʺ) in der Axialrichtung in Richtung der Bremsscheibe (10", ..., 10‴‴) zu bewegen oder eine entsprechende Bewegung des mindestens einen Feststellbremsbelags (22", 22ʺʺ, ..., 22‴‴ʺ) zu erlauben, und wobei die Feststellbremsanordnung (20", 20ʺʺ) mindestens ein lokales Verschiebungselement (25", 26", 26‴‴ʺ) umfasst, das zwischen dem mindestens einen Feststellbremsbelag (22", 22ʺʺ, ..., 22‴‴ʺ) und der Feststellbremsbelagträgeranordnung (21", 21"", 21‴‴ʺ) angeordnet ist, konfiguriert, um eine relative Verschiebung des mindestens einen Feststellbremsbelags (22", 22ʺʺ, ..., 22‴‴ʺ) in Bezug auf die Feststellbremsbelagträgeranordnung (21", 21ʺʺ, 21‴‴ʺ) in einer Richtung innerhalb der Bremsoberflächenebene zu erlauben.

9. Bremsanordnung (1") nach Anspruch 8, wobei das mindestens eine lokale Verschiebungselement (25") ein Lagerelement (25") ist, das auf einer Oberflächenseite des mindestens einen Feststellbremsbelags (22"), die der Bremsoberfläche des mindestens einen Feststellbremsbelags (22") gegenüberliegt, angeordnet ist.

10. Bremsanordnung (1") nach Anspruch 8 oder 9, wobei das mindestens eine lokale Verschiebungselement (26", 26‴‴ʺ) ein Federelement (26", 26‴‴ʺ) ist, das auf einer Seitenoberflächenseite des mindestens einen Feststellbremsbelags (22", 22ʺʺ, ..., 22‴‴ʺ) im Wesentlichen parallel zur Axialrichtung und senkrecht zu einer Projektion der Drehbewegung der Bremsscheibe (10", ..., 10‴‴) parallel zu dem mindestens einen Feststellbremsbelag (22", 22ʺʺ, ..., 22‴‴ʺ) angeordnet ist, wobei eine jeweilige Federkraft in der Richtung der Projektion der Drehbewegung der Bremsscheibe (10", ..., 10‴‴) parallel zu dem mindestens einen Feststellbremsbelag (22, 22', ..., 22‴‴) wirkt.

11. Bremsanordnung (1", 1"", 1‴‴ʺ) nach einem der Ansprüche 8 bis 10, wobei die Feststellbremsanordnung (20", 20ʺʺ) eine Überlastkupplung (27‴ʺʺ) umfasst, die auf der Oberflächenseite des mindestens einen Feststellbremsbelags (22‴‴ʺ) angeordnet ist, die der Bremsoberfläche des mindestens einen Feststellbremsbelags (22‴‴ʺ) gegenüberliegt.

12. Bremsanordnung (1 ", 1ʺʺ, 1‴‴ʺ) nach einem der Ansprüche 8 bis 11, wobei die Feststellbremsanordnung (20", 20ʺʺ) ein axiales Federelement (28‴‴ʺ) umfasst, das auf der Oberflächenseite des mindestens einen Feststellbremsbelags (22 ) gegenüber der Bremsoberfläche des mindestens einen Feststellbremsbelags (22‴‴ʺ) angeordnet ist, wobei eine vorbestimmte axiale Federkraft in der Axialrichtung wirkt.

13. Verfahren zum Anlegen einer Feststellbremskraft auf eine radiale Oberflächenseite einer Bremsscheibe (10, 10', ..., 10‴‴ʺ) einer Bremsanordnung (1", 1ʺʺ) nach einem der Ansprüche 1 bis 12, **dadurch gekennzeichnet, dass** der mindestens eine Feststellbremsbelag (22", 22ʺʺ) der Bremsanordnung (1", 1ʺʺ) nur aktiviert wird, um die Feststellbremskraft in einem Stillstandszustand eines Fahrzeugs anzulegen.

14. Fahrzeug, das eine Bremsanordnung (1, 1", 1‴‴) nach einem der Ansprüche 1 bis 12 umfasst,
wobei das Fahrzeug vorzugsweise als ein Nutzfahrzeug, ein Lastkraftwagen, ein Anhänger, ein Bus und/oder als eine Kombination eines Zugfahrzeugs und eines Anhängers konfiguriert ist, und/oder
wobei das Fahrzeug vorzugsweise einen rein elektrischen, einen hybriden oder einen herkömmlichen Antriebsstrang umfasst.

## Revendications

1. Ensemble frein (1, 1', 1", 1"", 1‴‴ʺ) pour un véhicule, comprenant :
un disque de frein (10, 10', ..., 10‴‴ʺ) pouvant tourner autour d'un axe de rotation (R),
au moins un ensemble frein de service (30, 30', 30", 30"") comprenant au moins une plaquette de frein de service (32, 32', 32", 32ʺʺ) et configuré pour appliquer une force de frein de service sur un côté de surface radiale du disque de frein (10, 10', ..., 10""""), dans lequel la au moins une plaquette de frein de service (32, 32', 32", 32"") peut se déplacer axialement par rapport à l'axe de rotation (R) et comprend une surface de freinage de frein de service faisant face au côté de surface radiale du disque de frein (10, 10', ..., 10"""") pour appliquer la force de frein de service, et
au moins un ensemble frein de stationnement (20, 20', 20", 20"") comprenant au moins une plaquette de frein de stationnement (22, 22', 22", 22"", ..., 22"""") et configuré pour appliquer une force de frein de stationnement sur le, ou un autre, côté de surface radiale du disque de frein (10, 10', ..., 10‴‴ʺ), dans lequel la au moins une plaquette de frein de stationnement (22, 22', 22", 22"", ..., 22"""") peut se déplacer axialement par rapport à l'axe de rotation (R) et comprend une surface de freinage de frein de stationnement faisant face au, ou à l'autre, côté de surface radiale du disque de frein (10, 10', ..., 10""") pour appliquer la force de frein de stationnement,
dans lequel la surface de freinage de frein de stationnement de la au moins une plaquette de frein de stationnement (22, 22', 22", 22"", ..., 22‴‴ʺ) est agencée à une distance radiale de plaquette de frein de stationnement (rPB) par rapport à l'axe de rotation (R) différente d'une distance radiale de plaquette de frein de service (rSB) d'une surface de freinage de frein de service de la au moins une plaquette de frein de service (32, 32', 32", 32""), **caractérisé en ce que**
la au moins une plaquette de frein de stationnement (22", 22"") est agencée pour s'étendre dans un canal de refroidissement (12", 12"', 12"") du disque de frein (10", 10‴, 10'‴) formé entre deux côtés de surface radiale externes du disque de frein (10", 10‴, 10ʺʺ) à partir d'une circonférence externe, ou d'une circonférence interne, du disque de frein (10", 10‴, 10ʺʺ)..

2. Ensemble frein (1, 1", 1"""") selon la revendication 1, dans lequel la distance radiale de plaquette de frein de stationnement (rPB) est supérieure à la distance radiale de plaquette de frein de service (rSB) par rapport à l'axe de rotation (R).

3. Ensemble frein (1', 1ʺʺ, 1‴‴ʺ) selon la revendication 1, dans lequel la distance radiale de plaquette de frein de stationnement (rPB) est inférieure à la distance radiale de plaquette de frein de service (rSB) par rapport à l'axe de rotation (R).

4. Ensemble frein (1, 1', 1 ", 1 *ʺʺ,* 1"""") selon l'une quelconque des revendications précédentes, dans lequel le disque de frein (10, 10', ..., 10‴‴ʺ) comprend une partie de disque de frein de stationnement (10a, 10a') faisant face à la surface de freinage de frein de stationnement de la au moins une plaquette de frein de stationnement (22, 22', 22", 22ʺʺ, ..., 22‴‴ʺ) dans au moins une position de rotation du disque de frein (10, 10', ..., 10‴‴ʺ), et une partie de disque de frein de service (10b, 10b') faisant face à la surface de freinage de frein de service de la au moins une plaquette de frein de service (32, 32', 32", 32"") dans la au moins une, ou dans au moins une autre, position de rotation du disque de frein (10, 10', ..., 10""""), et dans lequel un appariement par frottement de la partie de disque de frein de stationnement (10a, 10a') et de la surface de freinage de frein de stationnement de la au moins une plaquette de frein de stationnement (22, 22', 22", 22ʺʺ, ..., 22‴‴ʺ) est configuré pour fournir un coefficient de frottement différent du coefficient de frottement d'un appariement par frottement de la partie de disque de frein de service (10b, 10b') et de la surface de freinage de frein de service de la au moins une plaquette de frein de service (32, 32', 32", 32ʺʺ).

5. Ensemble frein (1, 1', 1ʺʺ, 1ʺʺ, 1"""") selon l'une quelconque des revendications précédentes, dans lequel le coefficient de frottement de l'appariement par frottement de la surface de freinage de frein de stationnement de la au moins une plaquette de frein de stationnement (22, 22', 22", 22ʺʺ, ..., 22‴‴ʺ) et du disque de frein (10, 10', ..., 10‴‴ʺ) est au moins 0,55.

6. Ensemble frein (1", 1"") selon l'une quelconque des revendications précédentes, dans lequel l'ensemble frein comprend l'ensemble frein de stationnement comprenant la au moins une plaquette de frein de stationnement (22", 22"") agencée pour s'étendre dans un canal de refroidissement (12", 12"', 12ʺʺ) du disque de frein (10", 10‴, 10"") et un autre ensemble frein de stationnement.

7. Ensemble frein (1", 1"", 1‴‴ʺ) selon l'une quelconque des revendications précédentes, dans lequel la surface de freinage de frein de stationnement de la au moins une plaquette de frein de stationnement (22", 22"", ..., 22"""") comprend une partie d'ajustement de forme de plaquette de frein de stationnement (22a", 22a""), et le disque de frein (10", .... 10"""") comprend une partie d'ajustement de forme de disque de frein correspondante (11", ..., 11""") à la distance radiale de plaquette de frein de stationnement (rPB).

8. Ensemble frein (1", 1ʺʺ, 1‴‴ʺ) selon la revendication 7, dans lequel l'ensemble frein de stationnement (20", 20"") comprend un ensemble support de plaquette de frein de stationnement (21", 21ʺʺ, 21‴‴ʺ) portant la au moins une plaquette de frein de stationnement (22", *22"",* ..., 22‴‴ʺ) et configuré pour déplacer la au moins une plaquette de frein de stationnement (22", 22ʺʺ, ..., 22"""") vers le disque de frein (10", ..., 10""") dans la direction axiale ou pour permettre un mouvement respectif de la au moins une plaquette de frein de stationnement (22", 22"", ..., 22""""), et dans lequel l'ensemble frein de stationnement (20", 20"") comprend au moins un élément de déplacement local (25", 26", 26"""") agencé entre la au moins une plaquette de frein de stationnement (22", 22ʺʺ, ..., 22‴‴ʺ) et l'ensemble support de plaquette de frein de stationnement (21", 21ʺʺ, 21‴‴ʺ) configuré pour permettre un déplacement relatif de la au moins une plaquette de frein de stationnement (22", 22"", ..., 22‴‴ʺ) par rapport à l'ensemble support de plaquette de frein de stationnement (21", 21"", 21"""") dans une direction à l'intérieur du plan de surface de freinage.

9. Ensemble frein (1") selon la revendication 8, dans lequel le au moins un élément de déplacement local (25") est un élément de palier (25") agencé sur un côté de surface de la au moins une plaquette de frein de stationnement (22") opposée à la surface de freinage de la au moins une plaquette de frein de stationnement (22").

10. Ensemble frein (1") selon la revendication 8 ou 9, dans lequel le au moins un élément de déplacement local (26", 26‴ʺʺ) est un élément de ressort (26", 26‴ʺʺ) agencé sur un côté de surface latérale de la au moins une plaquette de frein de stationnement (22", 22"", ..., 22‴‴ʺ) sensiblement parallèlement à la direction axiale et perpendiculairement à une projection du mouvement de rotation du disque de frein (10", ..., 10‴‴) parallèlement à la au moins une plaquette de frein de stationnement (22", 22ʺʺ*,* ..., 22‴‴ʺ) avec une force de ressort respective agissant dans la direction de la projection du mouvement de rotation du disque de frein (10", ..., 10‴‴) parallèlement à la au moins une plaquette de frein de stationnement (22, 22', ..., 22‴ʺ).

11. Ensemble frein (1", 1"", 1‴‴ʺ) selon l'une quelconque des revendications 8 à 10, dans lequel l'ensemble frein de stationnement (20", 20"") comprend un embrayage de surcharge (27‴ʺʺ) agencé sur le côté de surface de la au moins une plaquette de frein de stationnement (22‴ʺʺ) opposée à la surface de freinage de la au moins une plaquette de frein de stationnement (22‴ʺʺ).

12. Ensemble frein (1", 1"", 1‴‴ʺ) selon l'une quelconque des revendications 8 à 11, dans lequel l'ensemble frein de stationnement (20", 20ʺʺ) comprend un élément de ressort axial (28‴‴ʺ) agencé sur le côté de surface de la au moins une plaquette de frein de stationnement (22‴‴ʺ) opposée à la surface de freinage de la au moins une plaquette de frein de stationnement (22"""") avec une force de ressort axiale prédéterminée agissant dans la direction axiale.

13. Procédé d'application d'une force de frein de stationnement sur un côté de surface radiale d'un disque de frein (10, 10', ..., 10‴‴ʺ) d'un ensemble frein (1", 1ʺʺ) selon l'une quelconque des revendications 1 à 12, **caractérisé en ce que** la au moins une plaquette de frein de stationnement (22", 22"") de l'ensemble frein (1", 1"") est activée uniquement pour appliquer la force de frein de stationnement dans un état d'arrêt d'un véhicule.

14. Véhicule comprenant un ensemble frein (1, 1", 1‴‴) selon l'une des revendications 1 à 12,
dans lequel le véhicule est, de préférence, configuré comme un véhicule utilitaire, un camion, une remorque, un bus et/ou comme une combinaison d'un véhicule tracteur et d'une remorque, et/ou
dans lequel le véhicule comprend, de préférence, un groupe motopropulseur purement électrique, hybride ou conventionnel.
